# EUROPÄISCHE PATENTSCHRIFT

(11) **EP 1 456 029 B1**
(45) Veröffentlichungstag und Bekanntmachung des Hinweises auf die Patenterteilung: **16.08.2006**
(21) Anmeldenummer: 02792819.1
(22) Anmeldetag: 27.11.2002
(51) Int. Cl.: B32B 27/20

(54) **IR-REFLEKTIERENDE, TRANSPARANTE MEHRSCHICHT-KUNSTSTOFFLAMINATE**
INFRARED-REFLECTIVE, TRANSPARENT, MULTI-LAYER PLASTIC LAMINATES
LAMINES PLASTIQUES MULTICOUCHES TRANSPARENTS REFLECHISSANT LE RAYONNEMENT IR

(30) Priorität: 10.12.2001 DE 10160569
(43) Veröffentlichungstag der Anmeldung: 15.09.2004
(73) Patentinhaber: Bayer MaterialScience AG, 51368 Leverkusen (DE)
(72) Erfinder: GORNY, Rüdiger, Moon Twp, PA 15108 (US); ANDERS, Siegfried, 51147 Köln (DE); NISING, Wolfgang, 53757 St. Augustin (DE)
(86) Internationale Anmeldenummer: PCT/EP2002/013403
(87) Internationale Veröffentlichungsnummer: WO 2003/053689

(56) Entgegenhaltungen:
- EP-A- 0 523 888
- EP-A- 0 548 822
- EP-A- 1 256 437
- WO-A-96/26070
- DE-A- 10 006 651
- US-A- 4 090 773

## Beschreibung

Die Erfindung betrifft ein mehrschichtiges Erzeugnis aus Kunststoff mit hoher IR-Reflexion und hohem Glanz.

Mehrschichtige Erzeugnisse mit Schichten, die transparente thermoplastische Kunststoffe enthalten, sind bekannt.

Insbesondere Polycarbonatplatten sind bekannt. Diese werden für eine Vielzahl von Anwendungszwecken bereitgestellt. Ihre Herstellung erfolgt beispielsweise durch Extrusion von Zusammensetzungen enthaltend Polycarbonat (Formmassen) und gegebenenfalls Coextrusion mit Formmassen, die einen erhöhten Anteil an UV-Absorbem enthalten.

Polycarbonatplatten sind aus EP-A 0 110 221 bekannt.

Für den Langzeitschutz von Polycarbonatplatten gegen Vergilbung durch UV-Licht lehrt EP-A 0 320 632, dass die Platten mit einer Coextrusionsschicht auszurüsten sind, die schwerflüchtige UV-Absorber in erhöhten Konzentrationen enthält.

EP-B 0 678 376 und EP-B 0 595 413 lehren, dass für Platten aus Polyestern, insbesondere für Platten aus Copolyestern von aromatischen Dicarbonsäuren und Mischungen zweier aliphatischer Diole wie z.B. PETG, der Witterungsschutz durch eine Coextrusion mit Deckschichten erreicht wird, die UV-Absorber z.B. auf Basis von Benzotriazolen in erhöhten Konzentrationen enthalten.

Aus der deutschen Patentschrift DE-C 25 44 245 ist eine Tafel aus Polymethylmethacrylat mit einem Gehalt an lichtreflektierenden, parallel zur Oberfläche ausgerichteten Teilchen bekannt. Ihre Schichtdicke ist so bemessen, dass sich sichtbares Licht weitgehend durchlassen und infrarote Strahlung weitgehend reflektieren.

Der bekannte Körper enthält die lichtreflektierenden Teilchen in dem Basismaterial aus Polymethylmethacrylat. Sie werden in das flüssige methylmethacrylat-Monomer eingebracht, dieses in eine aus parallel angeordneten Glasplatten gebildete Polymerisationskammer eingefüllt und teilweise polymerisiert. Bis zu diesem Zeitpunkt sind die Teilchen auf die untere Glasplatte abgesunken. Durch eine Parallelverschiebung dieser Platte werden die Teilchen parallel zur Oberfläche ausgerichtet und in dieser Stellung bei Fortsetzung der Polymerisation festgehalten. Durch diese Behandlungsstufe ist das Herstellungsverfahren aufwendig und teuer.

EP-A 340 313 beschreibt sonnenstrahlungsabweisende Überzüge für Schiffe, Tanks, Gebäude und dergl., um ihre Erwärmung in der Sonne zu vermindern. Die Überzüge enthalten ein Bindemittel, ein hitzereflektierendes Pigment und gegebenenfalls beliebige Farbpigmente.

Nach EP-A 428 937 werden Polyethylenbahnen für Gewächshäuser durch Streichen oder Spritzen mit einem Überzug versehen, der lichtreflektierende Pigmente in einer Matrix aus einem Lackbindemittel enthält. Da die Pigmentteilchen durch das Auftragsverfahren nicht orientiert werden, haben sie nur eine schattierende Wirkung und ergeben eine unbefriedigende Transmission, infolge der geringen Haftung üblicher Lackbindemittel an Polyethylen kann die Beschichtung leicht mit einem Wasserstrahl von der beschichteten Bahn abgewaschen werden.

EP-A 0 548 822 beschreibt PMMA-Platten und Polycarbonatplatten, die in der Coextrusions-Schicht spezielle Perlglanzpigmente enthalten. Diese Perlglanzpigmente bestehen aus einem Trägermaterial, z.B. aus Glimmer, das mit einer 60 bis 120 nm dicken Titandioxid-Schicht bedeckt ist.

Die Herstellung dieser Perlglanzpigmente ist z.B. in DE-A 196 18 569 beschrieben.

EP-A 0 548 822 lehrt, dass eine Selektivitätskennzahl (SKZ) von über 1,15 erforderlich ist um ausreichende IR-Reflexion zu erreichen. Die SKZ ist dabei wie folgt definiert.

Der Quotient T/g wird auch als Selektivitätskennzahl SKZ (nach DIN 67 507) bezeichnet. Man versteht darunter den Quotienten aus der prozentualen Lichttransmission im sichtbaren Bereich und der prozentualen Gesamtdurchlässigkeit für Strahlungsenergie. Die SKZ ist ein Maß für die IR-Reflexion und insofern auch für die Wirksamkeit von Sonnenschutzverglasungen; sie soll deshalb möglichst hoch sein.

Bekannt ist, dass die in EP-A 0 548 822 beschriebenen Platten 20 bis 40 Gew.-% der Perlglanzpigmente in der Coextrusionsschicht enthalten um die erforderlichen hohen Selektivitätskennzahlen zu erreichen. Es ist von Nachteil, dass ein so hoher Anteil des Perlglanzpigmentes erforderlich ist. Dadurch werden die Platten sehr teuer.

DE-A 100 06 651 lehrt, dass Perlglanzpigmente mit drei oder mehr Schichten aus Titandioxid und Siliziumdioxid auf Glimmer bei der Bewitterung von Kunststoffen, -die diese Pigmente enthalten, eine besonders niedrige Vergilbung bei der Bewitterung bewirken.

Perlglanzpigmente haben den Nachteil, dass sie bei Einsatz in einer außenliegenden Schicht eines mehrschichtigen Erzeugnisses zu einer matten Oberfläche führen. Außerdem ist ein hoher Anteil der Perlglanzpigmente erforderlich.

Der vorliegenden Erfindung liegt somit die Aufgabe zugrunde, IR-reflektierende Erzeugnisse mit Selektivitätskennzahlen (SKZ) größer als 1.15 bereitzustellen, deren Oberfläche einen hohen Glanz aufweist und die mit möglichst geringen Mengen an Perlglanzpigment auskommen.

Diese Aufgabe wird gelöst durch ein mehrschichtiges Erzeugnis umfassend drei Schichten A, B und C, wobei Schicht A einen transparenten thermoplastischen Kunststoff enthält, und wobei Schicht B einen transparenten thermoplastischen Kunststoff und ein Pigment, das aus einem transparenten Trägermaterial und einer darüberliegenden 150 bis 200 nm dicken Titandioxid-Schicht besteht, enthält, und wobei Schicht C einen transparenten thermoplastischen Kunststoff enthält und wobei über der Titandioxid-Schicht weitere Schichten aufgetragen sein können. Dieses mehrschichtiges Erzeugnis ist Gegenstand der vorliegenden Erfindung.

Die Konzentration des Pigmentes kann der Fachmann in Routineversuchen optimieren. Er wird die Konzentration so wählen, dass die SKZ größer als 1,15 ist. Die Konzentration hängt natürlich auch von der Dicke der Schicht B ab.

Falls über der Titandioxidschicht noch weitere Schichten aufgetragen sind, sind diese so zu wählen, dass sie das Erreichen einer SKZ von über 1,15 nicht verhindern.

Eine besondere Ausführungsform der vorliegenden Erfindung ist das genannte mehrschichtige Erzeugnis, wobei Schicht B 15 bis 250 µm dick ist.

Eine weitere besondere Ausführungsform der vorliegenden Erfindung ist das genannte mehrschichtige Erzeugnis, wobei der transparente thermoplastische Kunststoff, der in den Schichten A, B und C enthalten ist, ausgewählt ist aus der Gruppe bestehend aus Polycarbonat, Polymethylmethacrylat, modifiziertes PMMA (das sind Copolymere aus Methylmethacrylat und Butylmethacrylat oder Butylacrylat oder anderen gängigen Comonomeren), transparentes ABS, Polystyrol, Styrol-Acrylnitril-Copolymerisat, transparentes PVC und Polyester, insbesondere solche mit Wiederholungseinheiten abgeleitet von Ethylenglycol und/oder Cyclohexandimethanol und/oder Butylenglycol und Terephthalsäure und/oder Isophthalsäure und deren Mischungen.

Eine weitere besondere Ausführungsform der vorliegenden Erfindung ist das genannte mehrschichtige Erzeugnis, wobei der transparente thermoplastische Kunststoff mindestens einer der Schichten A, B und C ein Copolyester ist, abgeleitet von Dicarbonsäuren und Diolen, wobei die Dicarbonsäuren ausgewählt sind aus der Gruppe bestehend aus Terephthalsäure, Isophthalsäure und Cyclohexan-1,4-dicarbonsäure und wobei die Diole ausgewählt sind aus der Gruppe bestehend aus Ethylenglycol, Cyclohexandimethanol und Diethylenglycol, und wobei die Wiederholungseinheiten, die von Diethylenglycol abgeleitet sind, einen Anteil an allen Wiederholungseinheiten abgeleitet von Diolen von weniger als 5 mol-% haben.

Cyclohexandimethanol hat folgende Struktur:

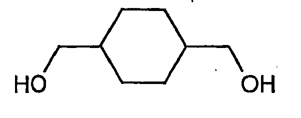

Eine weitere besondere Ausführungsform der vorliegenden Erfindung ist das genannte mehrschichtige Erzeugnis, wobei die Schicht B zwischen den Schichten A und C liegt.

Eine weitere besondere Ausführungsform der vorliegenden Erfindung ist das genannte mehrschichtige Erzeugnis ausgewählt aus der Gruppe bestehend aus Platten, massiven Platten, Wellplatten und Stegplatten.

Gegenstand der vorliegenden Erfindung ist weiterhin die Verwendung des erfindungsgemäßen mehrschichtigen Erzeugnisses zur Herstellung von Dekorplatten für Wandverkleidungen, Zwischenwänden, Deckenverkleidungen, Zwischendecken, Verscheibungen für Gewächshäuser, Verscheibungen für Wintergärten, Verscheibungen für Bushaltestellen, Überdachungen, Verscheibungen mit gedämpftem Lichteinfall, oder für den Ersatz von Farbanstrichen und für den Wärmeschutz.

Gegenstand der vorliegenden Erfindung ist weiterhin ein Erzeugnis enthaltend das erfindungsgemäße mehrschichtige Erzeugnis.

Dieses Erzeugnis ist bevorzugt ausgewählt aus der Gruppe bestehend aus Wandverkleidung, Zwischenwand, Deckenverkleidung, Zwischendecke, Verscheibung für Gewächshäuser, Verscheibung für Wintergärten, Verscheibung für Bushaltestellen, Überdachung, Verscheibung mit gedämpftem Lichteinfall, Ersatzprodukt für Farbanstriche.

Das erfindungsgemäße mehrschichtige Erzeugnis kann neben den Schichten A, B und C weitere Schichten enthalten. Die Reihenfolge der Schichten ist beliebig. Es ist bevorzugt, dass Schicht B zwischen den Schichten A und B liegt. Weitere bevorzugte Reihenfolgen der Schichten A, B und C sind die folgenden: C-B-A-C oder C-B-A-B-C oder C-B-A-B.

Die Schichten A und B und C können jeweils aus unterschiedlichen Kunststoffen bestehen. Wenn mehrere Schichten gleichartige Schichten auftreten (wie z. B. in C-B-A-B-C), dann können die gleichartigen Schichten (im Beispiel zweimal B und zweimal C) aus verschiedenen Zusammensetzungen bestehen.

Das erfindungsgemäße Pigment besteht aus einem transparenten Trägermaterial, das mit einer 150 bis 200 nm dicken Titandioxid-Schicht beschichtet ist. Derartige Pigmente sind bekannt und im Handel erhältlich. Bevorzugt sind Pigmente mit einer scheibenförmigen Gestalt mit einem Durchmesser von 1 bis 80 µm und einer Dicke von 0,4 bis 2,0 µm

Das transparente Trägermaterial ist Glimmer, ein anderes Schichtsilikat, Glasplättchen, PbCO₃ x Pb(OH)₂ sowie BiOCl in Plättchenform oder plättchenförmiges Siliziumdoxid, hergestellt nach dem in WO 93/108237 beschriebenen Verfahren.

Das erfindungsgemäße mehrschichtige Erzeugnis hat den Vorteil, eine Selektivitätskennzahlen größer als 1.15 aufzuweisen und eine Oberfläche mit hohem Glanz (bevorzugt >40 %, besonders bevorzugt >70 %) aufzuweisen. Dabei ist nur eine geringe Mengen des erfindungsgemäßen Pigments erforderlich.

Die erfindungsgemäßen mehrschichtigen Erzeugnisse können als Wärmeschutz-Verscheibungen verwendet werden.

Schicht B des erfindungsgemäßen mehrschichtigen Erzeugnisses ist bevorzugt 15 bis 250 µm, insbesondere 20 bis 150 µm, und ganz besonders bevorzugt 25 bis 70 µm, dick.

Schicht C des erfindungsgemäßen mehrschichtigen Erzeugnisses ist bevorzugt 5 bis 1000 µm dick.

Der transparente thermoplastische Kunststoff, der in den Schichten A, B und C des erfindungsgemäßen mehrschichtigen Erzeugnisses enthalten ist, ist bevorzugt ausgewählt aus der Gruppe bestehend aus Polycarbonat, Polymethylmethacrylat, modifiziertes PMMA (das sind Copolymere aus Methylmethacrylat und Butylmethacrylat oder Butylacrylat oder anderen gängigen Comonomeren), transparentes ABS, Polystyrol, Styrol-Acrylnitril-Copolymerisat, transparentes PVC und Polyester, insbesondere solche mit Wiederholungseinheiten abgeleitet von Ethylenglycol und/oder Cyclohexandimethanol und/oder Butylenglycol und Terephthalsäure und/oder Isophthalsäure und/oder Cyclohexan-1,4-dicarbonsäure und deren Mischungen.

Der transparente thermoplastische Kunststoff, der in den Schichten A, B und C des erfindungsgemäßen mehrschichtigen Erzeugnisses enthalten ist, kann auch der Polyester sein, der in US-A 5986040 offenbart wird. Er kann auch die in WO 99/63002 offenbarte Kunststoff-Zusammensetzung sein, er kann auch der in WO 0069945 offenbarte Kunststoff sein.

Besonders bevorzugt ist Polycarbonat, insbesondere das Homopolycarbonat auf Basis von Bisphenol A.

Um die Witterungsbeständigkeit der erfindungsgemäßen mehrschichtigen Erzeugnisse zu erhöhen, können sowohl die oberste Schicht als auch die mittlere Schicht UV-Absorber enthalten. Dieser kann in den verschiedenen Schichten in verschiedenen Mengen vorhanden sein.

Die Herstellung des erfindungsgemäßen mehrschichtigen Erzeugnisses kann durch Coextrusion, Schmelzekaschierung, Lackieren oder Laminieren erfolgen. Coextrusion ist bevorzugt.

Schicht C des erfindungsgemäßen mehrschichtigen Erzeugnisses kann zusätzlich UV-Absorber, Thermostabilisatoren, optische Aufheller, Farbstoffe und andere Additive enthalten.

Schicht C kann zusätzlich 0 bis 5 Gew.-% des Pigments, das in Schicht B enthalten ist, enthalten.

Die Schichten A, B und C können unabhängig voneinander zusätzlich UV-Absorber, Thermostabilisatoren, optische Aufheller, Farbstoffe und andere Additive enthalten.

Die erfindungsgemäßen-mehrschichtigen Erzeugnisse-können insbesondere massive Kunststoffplatten, Wellplatten und Stegplatten (z.B. Stegdoppelplatten, Stegdreifachplatten, gewellte Stegplatten) sein. Die Platten umfassen auch solche, die auf einer Seite oder beiden Seiten eine zusätzliche Deckschicht mit einer Formmasse mit einem erhöhten UV-Absorbergehalt aufweisen.

Die erfindungsgemäßen mehrschichtigen Erzeugnisse haben perlglanzartige Oberflächen. Sie können deshalb als Dekorplatten für Wandverkleidungen, Zwischenwände, Deckenverkleidungen, Zwischendecken, Verscheibungen und Bedachungen mit gedämpften Lichteinfall, zum modernen Raumdesign, für optisch ansprechende Fassadenverkleidungen, oder für den Ersatz von Farbanstrichen und für den Wärmeschutz verwendet werden.

Nachträgliche Bearbeitungen der erfindungsgemäßen mehrschichtigen Erzeugnisse, wie z.B. Tiefziehen oder Oberflächenbearbeitungen, wie z.B. Ausrüstung mit Kratzfestlacken, wasserspreitenden Schichten und ähnliches sind möglich und die durch diese Verfahren hergestellten Erzeugnisse sind ebenfalls Gegenstand der vorliegenden Erfindung.

Thermoplastische, aromatische Polycarbonate für die erfindungsgemäßen Coextrusionsfonnmassen oder die Formkörper mit denen sie beschichtet werden sind diejenigen, die auch bisher für diesen Zweck verwendet wurden. Dies sind Homopolycarbonate, Copolycarbonate und thermoplastische Polyestercarbonate. Sie haben mittlere Molekulargewichte M̅_{w} von 18.000 bis 40.000, vorzugsweise von 20.000 bis 36.000 und insbesondere von 22.000 bis 35.000, ermittelt durch Messung der rel. Lösungsviskosität einer Lösung des Polycarbonats in Dichlormethan oder in Mischungen gleicher Gewichtsmengen Phenol/o-Dichlorbenzol bei 25°C, geeicht durch Lichtstreuung.

Zur Herstellung von Polycarbonaten für die erfindungsgemäßen Coextrusionsformmassen sei beispielhaft auf "Schnell", Chemistry and Physics- of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly(ester)carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 und schließlich auf Dres. U. Grigo, K. Kircher und P.R. Müller "Polycarbonate" in BeckerBraun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren und wird beispielhaft an dem Phasengrenzflächenverfahren beschrieben.

Als Ausgangsverbindungen bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxyphenyl)ketone und α,α'- Bis(hydroxyphenyl)- diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl) diphenol (Bisphenol M), 4,4-(para-Phenylendiisopropyl)diphenol, 1,1-Bis-(4-hydroxyphenyl)-3,3,5-trimethylcyclohexan (BP-TMC) sowie gegebenenfalls deren Gemische. Besonders bevorzugt sind Homopolycarbonate auf Basis Bisphenol-A und Copolycarbonate auf der Basis der Monomere Bisphenol-A und 1,1-Bis-(4-hydroxyphenyl)-3,3,5-trimethylcyclohexan. Die erfindungsgemäß einzusetzenden Bisphenolverbindungen werden mit Kohlensäureverbindungen, insbesondere Phosgen oder beim Schmelzeumesterungsprozess Diphenylcarbonat bzw. Dimethylcarbonat, umgesetzt.

Polyestercarbonate werden durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol-%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol, vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden die in DE 4238123 genannten Katalysatoren verwendet.

Die Polycarbonate können durch den Einsatz geringer Mengen Verzweiger bewusst und kontrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-5'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenylisopropyl)-phenoxy)-methan; α,α',α"-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4"-dihydroxytriphenyl)-methyl)-benzol und insbesondere: 1,1,1-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1-20 Mol-% bevorzugt 2-10 Mol-% je Mol Bisphenol. Bevorzugt sind Phenol, 4-tert.-Butylphenol bzw. Cumylphenol.

Kettenabbrecher und Verzweiger können getrennt oder aber auch zusammen mit dem Bisphenol den Synthesen zugesetzt werden.

Die Herstellung der Polycarbonate für die erfindungsgemäßen Coextrusionsformmassen nach dem Schmelzeumesterungsprozeß ist in DE 4 238 123 beispielhaft beschrieben.

Die Einarbeitung der UV-Absorber in die zu verwendenden, erfmdungsgemäßen thermoplastischen Coextrusionsformmassen erfolgt nach üblichen Methoden, beispielsweise durch Vermischen von Lösungen der UV-Absorber mit Lösungen der Kunststoffe in geeigneten organischen Lösungsmitteln wie CH₂Cl₂, Halogenalkanen, Halogenaromaten, Chlorbenzol und Xylolen. Die Substanzgemische werden dann in bekannter Weise via Extrusion homogenisiert; die Lösungsgemische werden in bekannter Weise durch Ausdampfen des Lösungsmittels und anschließender Extrusion entfernt, beispielsweise compoundiert.

Geeignete Stabilisatoren für die Polycarbonate für die erfindungsgemäßen Coextrusionsformmassen sind beispielsweise Phosphine, Phosphite oder Epoxide oder Si enthaltende Stabilisatoren und weitere in EP 0 500 496 A1 und US 3,673,146 beschriebene Verbindungen. Beispielhaft seien Triphenylphosphine, Diphenylalkylphosphite, Phenyldialkylphosphite, Tris-(nonylphenyl)phosphit, Tetrakis-(2,4-di-tert.-butylphenyl)-4,4'-biphenylen-diphosponit und Triarylphosphit genannt. Besonders bevorzugt sind Triphenylphosphin und Tris-(2,4-di-tert.-butylphenyl)phosphit.

Die erfindungsgemäßen Coextrusionsformmassen können zur Coextrusion von Platten verwendet werden. Diese Platten können einseitig oder beidseitig mit Coexschichten versehen werden.

Die Coextrusion als solche ist literaturbekannt (siehe beispielsweise EP 110 221 und EP 110 238).

Geeignete UV-Absorber für die gegebenenfalls zu verwendenden Coextrusionsmassen sind solche Verbindungen, die aufgrund ihres Absorptionsvermögens unterhalb 400 nm in der Lage sind, Polycarbonat wirksam vor UV-Licht zu schützen und ein Molekulargewicht von mehr als 370, vorzugsweise von 500 und mehr aufweisen.

Geeignete UV-Absorber sind insbesondere die in der WO 99/05205 beschriebenen Verbindungen der Formel (II) 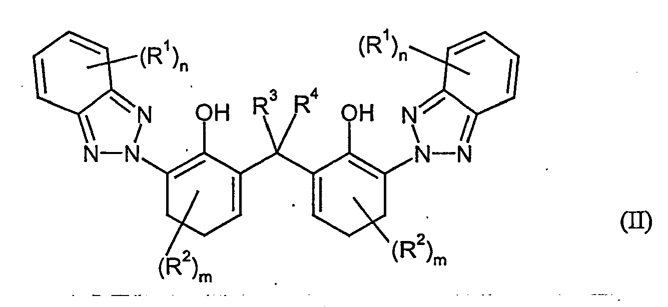 worin
R¹ und R² gleich oder verschieden sind und
H, Halogen, C₁-C₁₀-Alkyl, C₅-C₁₀-Cycloalkyl, C₇-C₁₃-Aralkyl, C₆-C₁₄-Aryl, -OR⁵ oder -(CO)-O-R⁵ bedeuten mit R⁵ = H oder C₁-C₄-Alkyl,
R³ und R⁴ ebenfalls gleich oder verschieden sind und H, C₁-C₄-Alkyl, C₅-C₆-Cycloalkyl, Benzyl oder C₆-C₁₄-Aryl bedeuten,
m 1,2 oder 3 ist und n 1,2,3 oder 4 ist,
sowie solche der Formel (III) 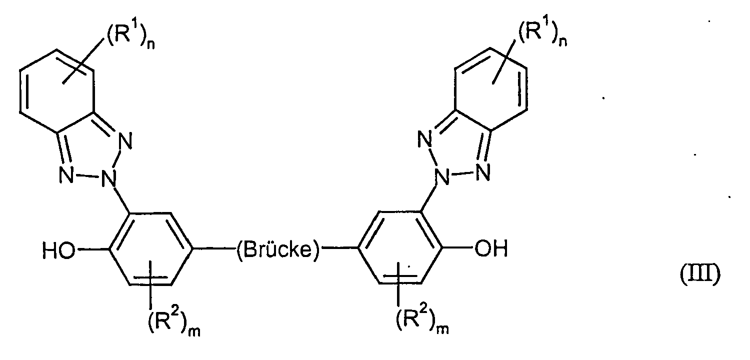 worin die Brücke 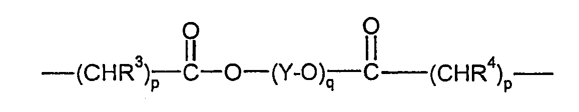 bedeutet,
R¹, R², m und n die für Formel (II) genannte Bedeutung haben,
worin außerdem p eine ganze Zahl von 0 bis 3 ist,
q eine ganze Zahl von 1 bis 10 ist,
Y -CH₂-CH₂-, -(CH₂)₃-, -(CH₂)₄-, -(CH₂)₅-, -(CH₂)₆-, oder CH(CH₃)-CH₂- ist
und
R³ und R⁴ die für Formel (II) genannte Bedeutung haben.

Weitere geeignete UV-Absorber sind solche, die substituierte Triazine darstellen, wie das 2,4-Bis(2,4-dimethylphenyl)-6-(2-hydroxy-4-n-octyloxyphenyl)-1,3,5-triazin (CYASORB® UV-1164) oder 2-(4,6-Diphenyl-1,3,5-triazin-2-yl)-5-(hexyl)oxy-Phenol (Tinuvin® 1577). Besonders bevorzugt als UV-Absorber ist 2,2-Methylenbis-(4-(1,1,3,3-tetramethylbutyl)-6-(2H-benztriazol-2-yl)phenol), das im Handel unter der Bezeichnung Tinuvin® 360 oder Adeka Stab® LA 31 vertrieben wird. Geeignet sind außerdem die in EP 0500496 A1 genannten UV-Absorber. Der in WO 96/15102, Beispiel 1 erhaltene UV-Absorber Uvinul 3030 der BASF AG kann auch verwendet werden.

Beispiele für Antistatika sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Bevorzugte Füllstoffe sind Glasfasern, Glimmer, Silikate, Quarz, Talkum, Titandioxid oder Wollastonit. Bevorzugte Verstärkungsstoffe sind Glas- oder Kohlefasern.

Alle für die Synthese der erfindungsgemäßen Formmassen verwandten Einsatzstoffe und Lösungsmittel können aus ihrer Herstellung und Lagerung mit entsprechenden Verunreinigungen kontaminiert sein, wobei es das Ziel ist, mit so sauberen Ausgangsstoffen wie möglich zu arbeiten.

Das Vermischen der einzelnen Bestandteile kann in bekannter Weise sowohl sukzessive als auch simultan erfolgen und zwar sowohl bei Raumtemperatur als auch bei erhöhter Temperatur.

Die Einarbeitung der Zusätze in die erfindungsgemäßen Formmassen erfolgt in bekannter Weise durch Vermischen von Polymergranulat mit den Additiv(en) und anschließende Extrusion oder durch Vermischen der Lösungen von Polycarbonat mit Lösungen der Additive und anschließende Verdampfung der Lösungsmittel in bekannter Weise. Der Anteil der Additive in der Formmasse kann in weiten Grenzen variiert werden und richtet sich nach den gewünschten Eigenschaften der Formmasse. Der Gesamtanteil der Additive in der Formmasse beträgt etwa bis zu 40 Gew.-%, vorzugsweise 4 bis 30 Gew.-%, bezogen auf das Gewicht der Formmasse.

Die so erhaltenen Polymerzusammensetzungen können nach den üblichen Methoden, wie z.B. Heißpressen, Spinnen, Extrudieren oder Spritzgießen, in geformte Gegenstände überführt werden, wie z.B. Spielzeugteile, aber auch Fasern, Folien, Bändchen, Platten, Gefäße, Rohre und sonstige Profile. Die Polymerzusammensetzungen können auch zu Gießfolien verarbeitet werden. Die Erfindung betrifft daher weiterhin die Verwendung der erfindungsgemäßen Polymerzusammensetzungen zur Herstellung eines geformten Gegenstandes. Von Interesse ist auch die Verwendung von Mehrschichtsystemen.

Die Erfindung wird durch das folgende Beispiel weiter erläutert ohne darauf beschränkt zu sein.

### Beispiel

10 mm Stegdoppelplatten A, B, C und 16 mm Stegdreifachplatten D und E, wie sie beispielweise in EP-A 0 110 238 beschrieben sind (dort als mehrschichtige Hohlkammerkunststofftafel bezeichnet), wurden aus folgenden Formmassen erhalten: Als Basismaterial wurde Makrolon® 1243 (verzweigtes Bisphenol-A Polycarbonat der Bayer AG, Leverkusen mit einem Schmelzflussindex (MFR) gemäß ISO 1133 von 6,5 g/10 min bei 300°C und 1,2 kg Belastung) verwendet. Coextrudiert wurde dieses mit den in der Tabelle 1 angegebenen Compounds auf Basis Makrolon® 3108 (lineares Bisphenol-A Polycarbonat der Bayer AG, Leverkusen mit einem Schmelzflussindex (MFR) gemäß ISO 1133 von 6,5 g/10 min bei 300°C und 1,2 kg Belastung). Die Dicke der mittleren Coex-Schicht betrug etwa 60 µm und die Dicke der äußeren Schicht etwa 45 µm.

Die verwendeten Maschinen und Apparate zur Herstellung der mehrschichtigen Stegplatten werden im folgenden beschrieben:

Die Einrichtung bestand aus:
- dem Hauptextruder mit einer Schnecke der Länge 33 D und einem Durchmesser von 70 mm mit Entgasung
- dem Coexadapter (Feedblocksystem)
- zwei Coextrudern zum Aufbringen der Zwischenschicht und der Deckschicht mit je einer Schnecke der Länge 25 D und einem Durchmesser von 30 mm
- der speziellen Breitschlitzdüse mit 350 mm Breite
- dem Kalibrator
- der Rollenbahn
- der Abzugseinrichtung
- der Ablängvorrichtung (Säge)
- dem Ablagetisch.

Das Polycarbonat-Granulat des Basismaterials wurde dem Fülltrichter des Hauptextruders zugeführt, das UV-Coextrusionsmaterial dem des jeweiligen Coextruders. Im jeweiligen Plastifiziersystem Zylinder/Schnecke erfolgt das Aufschmelzen und Fördern des jeweiligen Materials. Beide Materialschmelzen wurden im Coexadapter zusammengeführt und bildeten nach Verlassen der Düse und Abkühlen im Kalibrator einen Verbund. Die weiteren Einrichtungen dienten dem Transport, Ablängen und Ablegen der extrudierten Platten.

Die erhaltenen Platten wurden anschließend einer farbmetrischen Bewertung unterzogen. Dabei wurden folgende Messverfahren herangezogen:
1. Die Transmission wurde auf Basis der Normen ASTM E 308 / ASTM D 1003 bestimmt.
2. Der Yellowness-Index wurde nach der Vorschrift ASTM E 313 bestimmt.
3. Der Glanz wurde nach der Vorschrift ASTM D 523 bestimmt.
4. Die Selektivitätskennzahl wurde nach der Vorschrift DIN 67507 bestimmt.

Es wurden Coextrusionsformmassen mit den in Tabelle 1 genannten Rezepturen auf Basis von Makrolon® 3108 hergestellt.

**Tabelle 1**

| **Nr.** | **Rezeptur (Angaben in Gew.-%) auf Basis von Makrolon**^{**®**} **3108** |
|---|---|
| **1** | 10 % herkömmliches Pigment¹⁾ + 5 % Tinuvin® 360⁴⁾ |
| **2** | 20 % herkömmliches Pigment²⁾ + 5 % Tinuvin® 360⁴⁾ |
| **3** | 14 % erfindungsgemäßes Pigment³⁾ + 5 % Tinuvin® 360⁴⁾ |
| **4** | 19 % herkömmliches Pigment²⁾ |
| **5** | 14 % erfindungsgemäßes Pigment ³⁾ |
| **6** | Makrolon® 3108 + 5 % Tinuvin 360⁴⁾ |

Die Rezepturen der Tabelle 1 sind die Zusammensetzungen der Schicht B in den Beispielen und der entsprechenden Schichten in den Vergleichsbeispielen.
1) = Magna Pearl® 1000 der Firma Costenoble GmbH, Eschborn, Deutschland
2) = Iriodin® AC 870 der Firma Merck KGaA, Darmstadt, Deutschland
3) = Iriodin® 9223 der Firma Merck KGaA, Darmstadt, Deutschland
4) = 2,2'-Methylenbis[4-(1,1,3,3-tetramethylbutyl)-6-(2H-benzotriazol-2-yl)phenol] der Firma Ciba Specialty Chemicals, Lampertheim, Deutschland

Der Aufbau der Pigmente ist der folgende:

Der Kern besteht in allen Fällen aus Glimmer.
Magna Pearl® 1000:
   Dicke der TiO2-Schicht über dem Kern: 60-110 nm
Iriodin® AC 870:
   Dicke der innersten TiO2-Schicht über dem Kern: 110-120 nm
   Dicke der mittleren SiO2-Schicht: 110-140 nm
   Dicke der äußersten TiO2-Schicht: 120-150 nm
   Iriodin® 9223
   Dicke der TiO2-Schicht über dem Kern: 150-200 nm

Die in Tabelle 1 genannten Batches wurden auf 10 mm Stegdoppelplatten (Tabelle 2) und auf 16 mm Stegdreifachplatten (Tabelle 3) aus Makrolon® 1243 coextrudiert.

**Tabelle 2**

| **Nr.** | **Mittlere Coextrusionsschicht** | **Äußere Coextrusionsschicht** |
|---|---|---|
| **A** | Keine vorhanden | Batch 1 |
| **B** | Keine vorhanden | Batch 2 |
| **C** | Keine vorhanden | Batch 3 |

**Tabelle 3**

| **Nr.** | **Mittlere Coextrusionsschicht** | **Äußere Coextrusionsschicht** |
|---|---|---|
| **D** | Batch 4 | Batch 6 |
| **E** | Batch 5 | Batch 6 |

An den Stegplatten wurden der Glanz und die Selektivitätskennzahl gemessen. Die Ergebnisse sind in Tabelle 5 dargestellt.

**Tabelle 5**

| Nr. | Glanz (60°) | Selektivitätskennzahl |
|---|---|---|
| A | 19% | 0,81 |
| B | 18 % | 1,13 |
| C | 14% | 1,29 |
| D | 99% | 1,14 |
| E | 98 % | 1,27 |

Wie Tabelle 5 zeigt, erfüllen nur die Platten E das gewünschte Anforderungsprofil. Bei den Platten A, B und C ist der Glanz viel zu niedrig. Bei der Platte D ist die Selektivitätskennzahl zu gering (kleiner als 1,15).

## Patentansprüche

1. Mehrschichtiges Erzeugnis umfassend drei Schichten A, B und C, wobei Schicht A einen transparenten thermoplastischen Kunststoff enthält, und wobei Schicht B einen transparenten thermoplastischen Kunststoff und ein Pigment, das aus einem transparenten Trägermaterial und einer darüberliegenden 150 bis 200 nm dicken Titandioxid-Schicht besteht, enthält, und wobei Schicht C einen transparenten thermoplastischen Kunststoff enthält, und wobei über der Titandioxid-Schicht weitere Schichten aufgetragen sein können und wobei der transparente thermoplastische Kunststoff, der in den Schichten A, B und C enthalten ist, ausgewählt ist aus der Gruppe bestehend aus Polycarbonat und einem Copolyester, der abgeleitet ist von Dicarbonsäuren und Diolen, wobei die Dicarbonsäuren ausgewählt sind aus der Gruppe bestehend aus Terephthalsäure, Isophthalsäure und Cyclohexan-1,4-dicarbonsäure und wobei die Diole ausgewählt sind aus der Gruppe bestehend aus Ethylenglycol, Cyclohexandimethanol und Diethylenglycol, und wobei die Wiederholungseinheiten, die von Diethylenglycol abgeleitet sind, einen Anteil an allen Wiederholungseinheiten abgeleitet von Diolen von weniger als 5 mol-% haben.

2. Mehrschichtiges Erzeugnis nach Anspruch 1, wobei Schicht B 15 bis 250 µm dick ist.

3. Mehrschichtiges Erzeugnis nach einem der Ansprüche 1 bis 2, wobei die Schicht B zwischen den Schichten A und C liegt.

4. Mehrschichtiges Erzeugnis nach einem der Ansprüche 1 bis 3 ausgewählt aus der Gruppe bestehend aus Platten, massiven Platten, Wellplatten und Steg platten.

5. Verfahren zur Herstellung des mehrschichtigen Erzeugnisses nach einem der Ansprüche 1 bis 4 durch Coextrusion.

6. Verwendung des mehrschichtiges Erzeugnisses nach einem der Ansprüche 1 bis 4 zur Herstellung von Dekorplatten für Wandverkleidungen, Zwischenwänden, Deckenverkleidungen, Zwischendecken, Verscheibungen für Gewächshäuser, Verscheibungen für Wintergärten, Verscheitungen für Bushaltestellen, Überdachungen, Verscheibungen mit gedämpftem Lichteinfall, oder für den Ersatz von Farbanstrichen und für den Wärmeschutz..

7. Erzeugnis enthaltend ein mehrschichtiges Erzeugnis nach einem der Ansprüche 1 bis 4.

8. Erzeugnis nach Anspruch 7 ausgewählt aus der Gruppe bestehend aus Wandverkleidung, Zwischenwand, Deckenverkleidung, Zwischendecke, Verscheibung für Gewächshäuser, Verscheibung für Wintergärten, Verscheibung für Bushaltestellen, Überdachung, Verscheitung mit gedämpftem Lichteinfall, Ersatzprodukt für Farbanstriche und Erzeugnis für den Wärmeschutz.

## Claims

1. Multi-layer product comprising three layers A, B and C, wherein layer A comprises a transparent thermoplastic plastics material, and wherein layer B comprises a transparent thermoplastic plastics material and a pigment consisting of a transparent support material and a titanium dioxide layer located above the support material and having a thickness of from 150 to 200 nm, and wherein layer C comprises a transparent thermoplastic plastics material, and wherein further layers may be applied over the titanium dioxide layer, and wherein the transparent thermoplastic plastics material contained in layers A, B and C is selected from the group consisting of polycarbonate and a copolyester derived from dicarboxylic acids and diols, wherein the dicarboxylic acids are selected from the group consisting of terephthalic acid, isophthalic acid and cyclohexane-1,4-dicarboxylic acid and wherein the diols are selected from the group consisting of ethylene glycol, cyclohexanedimethanol and diethylene glycol, and wherein repeating units derived from diethylene glycol account for less than 5 mol.% of all repeating units derived from diols.

2. Multi-layer product according to claim 1, wherein layer B has a thickness of from 15 to 250 µm.

3. Multi-layer product according to either claim 1 or claim 2, wherein layer B is located between layers A and C.

4. Multi-layer product according to any one of claims 1 to 3 selected from the group consisting of sheets, solid sheets, corrugated sheets and multi-wall sheets.

5. Process for the production of the multi-layer product according to any one of claims 1 to 4 by coextrusion.

6. Use of the multi-layer product according to any one of claims 1 to 4 in the production of decorative sheets for wall claddings, partition walls', ceiling claddings, false ceilings, glazing for greenhouses, glazing for conservatories, glazing for bus stops, roofing, glazing which attenuates incident light, or for the replacement of paints and for thermal insulation.

7. Product comprising a multi-layer product according to any one of claims 1 to 4.

8. Product according to claim 7 selected from the group consisting of wall cladding, partition wall, ceiling cladding, false ceiling, glazing for greenhouses, glazing for conservatories, glazing for bus stops, roofing, glazing which attenuates incident light, replacement product for paints and product for thermal insulation.

## Revendications

1. Produit multicouche comprenant trois couches A, B et C, la couche A contenant une matière plastique thermoplastique transparente et la couche B comprenant une matière plastique thermoplastique transparente et un pigment qui est constitué d'un matériau de support transparent et d'une couche superposée de dioxyde de titane de 150 à 200 nm d'épaisseur, et la couche C contenant une matière plastique thermoplastique transparente, et des couches supplémentaires pouvant être appliquées au-dessus de la couche de dioxyde de titane, et la matière plastique thermoplastique transparente qui est présente dans les couches A, B et C étant sélectionnée parmi le groupe constitué du polycarbonate et d'un copolyester qui est dérivé d'acides dicarboxyliques et de diols, les acides dicarboxyliques étant sélectionnés parmi le groupe constitué de l'acide téréphtalique, de l'acide isophtalique et de l'acide cyclohexane-1,4-dicarboxylique et les diols étant sélectionnés parmi le groupe constitué de l'éthylène glycol, du cyclohexanediméthanol et du diéthylène glycol, et les unités de répétition qui sont dérivées du diéthylène glycol ayant une contribution à toutes les unités de répétition dérivées de diols qui est inférieure à 5 % en moles.

2. Produit multicouche suivant la revendication 1, la couche B ayant une épaisseur de 15 à 250 µm.

3. Produit multicouche suivant l'une des revendications 1 à 2, la couche B se trouvant entre les couches A et C.

4. Produit multicouche suivant l'une des revendications 1 à 3 sélectionné parmi le groupe constitué des plaques, des plaques massives, des plaques ondulées et des plaques nervurées.

5. Procédé de fabrication du produit multicouche suivant l'une des revendications 1 à 4 par coextrusion.

6. Utilisation du produit multicouche suivant l'une des revendications 1 à 4 pour la fabrication de panneaux de décoration pour des revêtements muraux, de parois intermédiaires, de revêtements de plafonds, de faux-plafonds, de vitrages pour serres, de vitrages pour jardins d'hiver, de vitrages pour arrêts de bus, de toitures, de vitrages avec lumière incidente tamisée, ou pour le remplacement de peintures et pour la protection thermique.

7. Produit contenant un produit multicouche suivant l'une des revendications 1 à 4.

8. Produit suivant la revendication 7 sélectionné parmi le groupe constitué des revêtements muraux, des parois intermédiaires, des revêtements de plafonds, des faux-plafonds, des vitrages pour serres des vitrages pour jardins d'hiver, des vitrages pour arrêts de bus, des toitures, des vitrages avec lumière incidente tamisée, des produits de remplacement de peintures et des produits pour la protection thermique.
